# FASCICULE DE BREVET EUROPEEN

(11) **EP 3 143 373 B1**
(45) Date de publication et mention de la délivrance du brevet: **11.11.2020**
(21) Numéro de dépôt: 15725543.1
(22) Date de dépôt: 15.05.2015
(51) Int. Cl.: G01J 5/04, G01J 5/06, F25D 19/00

(54) **MODULE DE DETECTION INFRAROUGE ET EQUIPEMENT DE VISION INFRAROUGE ASSOCIE**
INFRAROTDETEKTIONSMODUL UND ZUGEHÖRIGE INFRAROTBETRACHTUNGSVORRICHTUNG
INFRARED DETECTION MODULE AND ASSOCIATED INFRARED VIEWING DEVICE

(30) Priorité: 15.05.2014 FR 1454333
(43) Date de publication de la demande: 22.03.2017
(73) Titulaire: Safran Electronics & Defense, 92100 Boulogne-Billancourt (FR)
(72) Inventeur: COTTEREAU, Bertrand, 92100 Boulogne-Billancourt (FR); BIDAUD, Michel, 92100 Boulogne-Billancourt (FR); DUVAL, Nicolas, 92100 Boulogne-Billancourt (FR); LEGOUBIN, Philippe, 92100 Boulogne-Billancourt (FR); RASSINOUX, Philippe, 92100 Boulogne-Billancourt (FR)
(74) Mandataire: Regimbeau
(86) Numéro de dépôt international: PCT/EP2015/060783
(87) Numéro de publication internationale: WO 2015/173407

(56) Documents cités:
- WO-A2-2013/061327
- DE-A1- 3 742 272
- JP-A- 2001 183 021
- US-A- 3 064 128
- US-A1- 2010 265 986

## Description

### DOMAINE DE L'INVENTION

L'invention concerne un module de détection infrarouge, ainsi qu'un équipement de vision infrarouge incorporant un tel module.

### ETAT DE LA TECHNIQUE

On connait des équipements de vision infrarouge, tels que des jumelles par exemple, qui permettent de visualiser des cibles la nuit ou à travers des fumées.

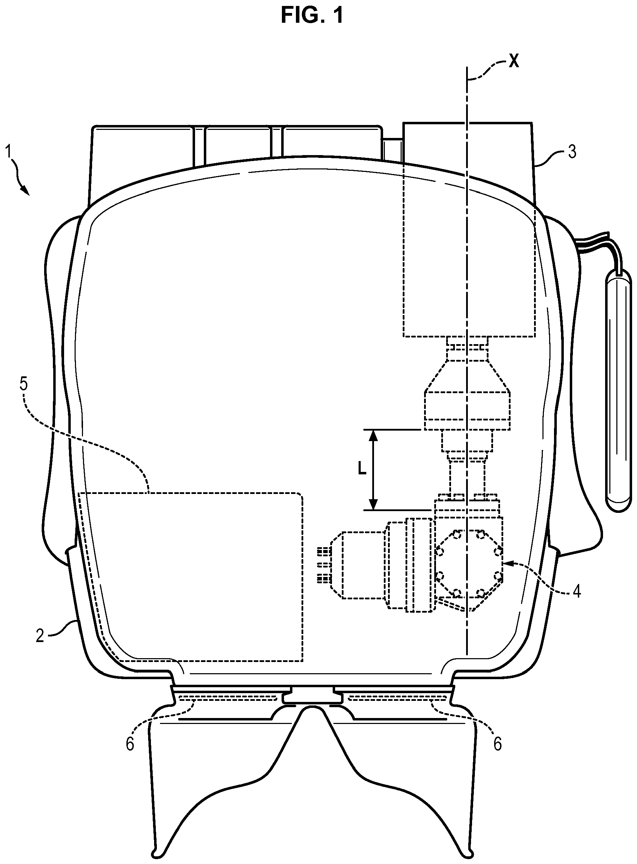

La figure 1 représente de manière schématique des jumelles de vision infrarouge 1. Les jumelles 1 comprennent un boîtier 2, un système optique 3, un module de détection infrarouge 4, un module de traitement 5 et deux écrans d'affichage 6. Le système optique 3 est agencé pour transmettre un rayonnement infrarouge émis par la cible au module de détection 4. Le module de détection 4 convertit le rayonnement infrarouge reçu en un signal de détection qui est transmis au module de traitement 5. Le module de traitement 5 commande l'affichage d'une image sur les écrans d'affichage 6 pour permettre à un utilisateur de visualiser la cible. A cet effet, l'utilisateur positionne ses yeux en face des écrans d'affichage 6.

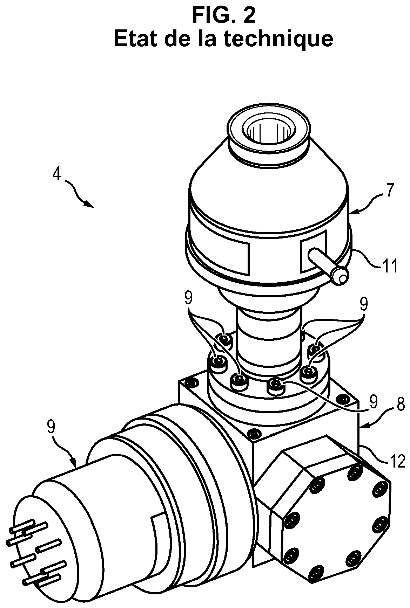

La figure 2 représente de manière schématique un module de détection infrarouge 4. Le module de détection infrarouge 4 comprend une partie de détection 7, une partie de production de froid 8 et une partie de motorisation 9. La partie de détection 7 comprend un détecteur infrarouge, tel qu'un détecteur infrarouge matriciel ou FPA (non-représenté sur cette figure). La partie de production de froid 8 comprend une machine à froid (non-représentée sur cette figure) assurant le refroidissement du détecteur infrarouge, à une température typiquement de l'ordre de 80 degrés Kelvin.

La partie de détection 7 comprend un carter de détecteur 11 propre à loger le détecteur infrarouge, et la partie de production de froid 8 comprend un carter de machine à froid 12 propre à loger la machine à froid. Lors de l'assemblage de la partie de détection 7 et de la partie de production de froid 8, le carter de détecteur est généralement vissé sur le carter de machine à froid au moyen de plusieurs vis de fixation 9. Le vissage doit être réalisé avec des couples de serrage importants (de l'ordre de 2 Newton.mètre) pour assurer une étanchéité du carter de machine à froid. En effet, le carter de machine à froid contient un gaz de refroidissement soumis à une forte pression (typiquement 20 bars) lors du fonctionnement de la machine à froid.

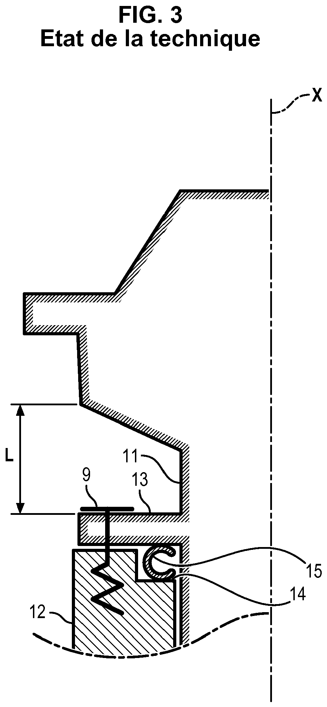

La figure 3 représente de manière schématique le principe de fixation du carter de détecteur 11 sur le carter de machine à froid 12. Le carter de détecteur 11 comprend une couronne 13 propre à venir en appui contre le carter de machine à froid 12. Par ailleurs, le carter de machine à froid 12 présente un épaulement 14 supportant un joint d'étanchéité 15. La couronne 13 du carter de détecteur 11 est vissée sur le carter de machine à froid 12, de manière à venir en appui sur le carter de machine à froid 12 par l'intermédiaire du joint d'étanchéité 15. Le document WO2013/061327 divulgue un détecteur infrarouge comprenant un carter de détecteur et un carter de machine à froid, le carter de détecteur étant fixé sur le carter de machine à froid au moyen de vis de fixation. JP2001183021 divulgue l'utilisation d'un écrou pour la vissage de deux parties dans une machine à froid.

Cependant, grâce au développement de nouvelles générations de détecteurs infrarouge, qui fonctionnent à des températures plus élevées (de l'ordre de 150 degrés Kelvin), il est devenu possible de réduire les dimensions de la partie de détection 7, et en particulier de réduire la longueur L du carter de détecteur 11 dans lequel est inséré l'échangeur thermique de la machine à froid. En effet, l'augmentation de la température de fonctionnement des détecteurs permet d'utiliser des machines à froid incluant des échangeurs thermiques de plus faibles dimensions.

La réduction des dimensions de l'échangeur thermique conduit à une réduction de l'encombrement du module de détection infrarouge selon la direction de l'axe optique X, et a pour avantage d'autoriser la conception de jumelles de plus en plus compactes.

Cependant, la réduction de l'encombrement du module de détection a également pour conséquence de rendre difficile l'accès aux vis de fixation 9, notamment à l'aide d'une clef de serrage.

### RESUME DE L'INVENTION

Un but de l'invention est de faciliter l'assemblage du carter de détecteur sur le carter de la machine à froid, dans un module de détection de dimensions réduites.

Ce but est atteint dans le cadre de la présente invention grâce à un module de détection infrarouge comprenant :
- une partie de détection comprenant un détecteur infrarouge et un carter de détecteur propre à loger le détecteur infrarouge,
- une partie de production de froid comprenant une machine à froid pour le refroidissement du détecteur et un carter de machine à froid propre à loger la machine à froid,
- un dispositif de fixation pour fixer le carter de détecteur sur le carter de machine à froid, le dispositif de fixation comprenant un écrou propre à être vissé sur le carter de détecteur et/ou sur le carter de machine à froid de manière à solidariser les carters entre eux, et
un pion d'indexage fixé à l'un des carters et un orifice d'indexage ménagé dans l'autre carter, l'orifice d'indexage étant prévu pour recevoir le pion d'indexage de manière à maintenir les carters en position l'un par rapport à l'autre pendant le vissage de l'écrou.

L'utilisation d'un écrou pour la fixation des carters entre eux, permet d'éliminer les vis de fixation, et facilite les opérations de vissage.

Le module de détection peut en outre être conçu de sorte qu'une fixation des carters est obtenue au moyen d'un unique écrou. De cette manière, la fixation ne nécessite qu'une seule opération de vissage.

Le module de détection peut en outre présenter les caractéristiques suivantes :
- le carter de détecteur comprend un doigt froid présentant une partie cylindrique allongée destinée à contenir un échangeur thermique de la machine à froid,
- le module comprend un joint d'étanchéité disposé entre le carter de détecteur et le carter de machine à froid, et dans lequel le vissage de l'écrou a pour effet de mettre en compression le joint d'étanchéité entre le carter de détecteur et le carter de machine à froid,
- le joint d'étanchéité est un joint ayant une section transversale en forme de C,
- l'écrou comprend une rondelle propre à venir en appui contre une surface d'appui du carter de détecteur, et une surface interne filetée propre à coopérer avec une surface externe filetée du carter de machine à froid, le vissage de l'écrou sur le carter de machine à froid ayant pour effet de serrer le carter de détecteur contre le carter de machine à froid par le biais de la rondelle,
- le carter de détecteur comprend une couronne, la surface d'appui étant une surface de la couronne,
- le carter de détecteur comprend une gorge et un anneau élastique reçu dans la gorge, la surface d'appui étant une surface de l'anneau élastique,
- l'écrou comprend une surface interne présentant une première portion filetée propre à coopérer avec une surface externe filetée du carter de détecteur et une deuxième portion filetée propre à coopérer avec une surface externe filetée du carter de machine à froid,
- la première portion filetée présente un premier pas et la deuxième portion filetée présente un deuxième pas, inversé par rapport au premier pas,
- l'écrou entoure le carter de détecteur et/ou le carter de machine à froid,
- le carter de détecteur comprend une première partie définissant une cavité logeant le détecteur infrarouge, et une deuxième partie propre à être insérée dans le carter de machine à froid, et dans lequel l'écrou a été monté sur la deuxième partie avant soudure de la première partie sur la deuxième partie, de sorte qu'une fois les deux parties soudées, l'écrou est inséparable du carter de détecteur,
- le détecteur présente un axe optique, et l'écrou est propre à être vissé sur le carter de détecteur et/ou sur le carter de machine à froid autour d'un axe de vissage confondu avec l'axe optique.

L'invention concerne également un équipement de vision infrarouge, comprenant un module de détection tel que défini précédemment.

L'équipement peut en particulier être des jumelles.

### PRESENTATION DES DESSINS

D'autres caractéristiques et avantages ressortirons encore de la description qui suit, laquelle est purement illustrative et non limitative, et doit être lue en regard des dessins annexés, parmi lesquels :
- la figure 1 représente de manière schématique un équipement de vision infrarouge,
- la figure 2 représente de manière schématique un module de détection conforme à l'état de la technique,
- la figure 3 est un schéma de principe illustrant une fixation du carter de détecteur sur le carter de machine à froid dans un module de détection conforme à l'état de la technique,
- la figure 4 représente de manière schématique un module de détection conforme à un premier mode de réalisation de l'invention,
- la figure 5 représente de manière schématique une fixation du carter de détecteur sur le carter de machine à froid dans un module de détection conforme au premier mode de réalisation de l'invention,
- les figures 6a et 6b représentent de manière schématique une fixation du carter de détecteur sur le carter de machine à froid dans un module de détection conforme à un deuxième mode de réalisation,
- les figures 7a et 7b représentent de manière schématique une fixation du carter de détecteur sur le carter de machine à froid dans un module de détection conforme à un troisième mode de réalisation.

### DESCRIPTION DETAILLEE D'UN MODE DE REALISATION

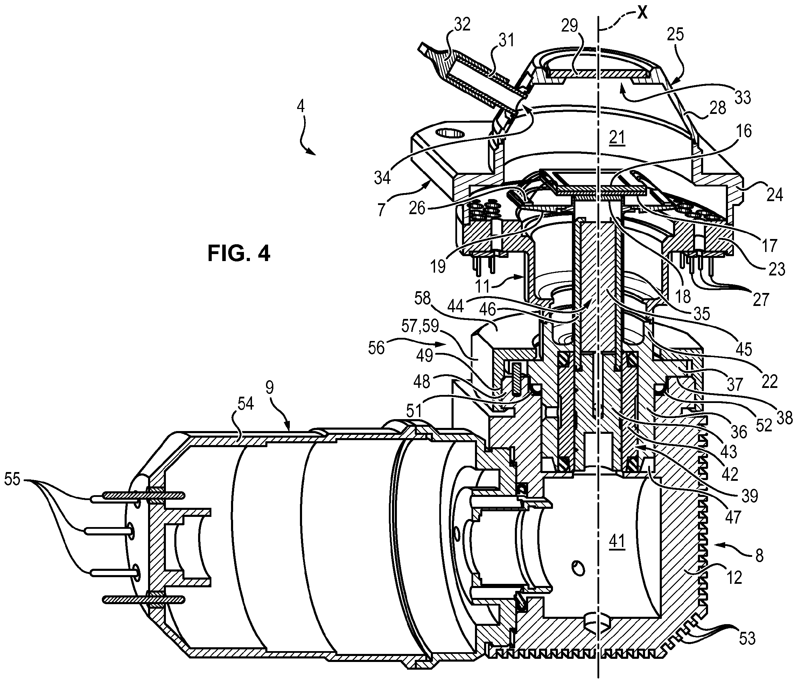

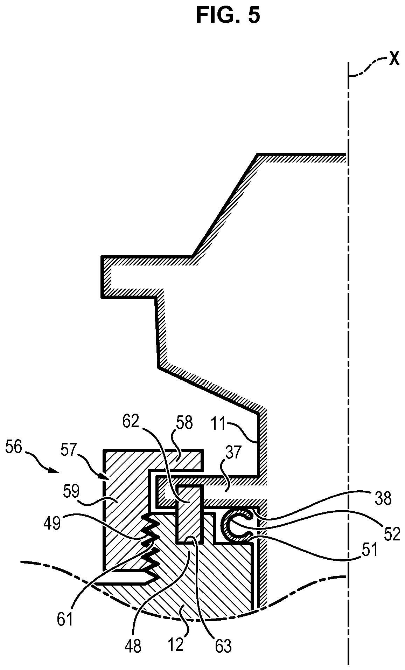

Selon un premier mode de réalisation illustré sur les figures 4 et 5, le module de détection 4 comprend une partie de détection 7, une partie de production de froid 8 et une partie de motorisation 9.

La partie de détection 7 comprend un détecteur infrarouge matriciel 16, un substrat 17 supportant le détecteur, un bouchon 18 en contact avec le substrat et une coupelle intermédiaire 19 propre à supporter un écran froid (non-représenté).

La partie de détection 7 comprend également un carter de détecteur définissant une première cavité 21 (ou chambre de détection) dans laquelle sont logés le détecteur infrarouge matriciel 16, le substrat 17, le bouchon 18 et la coupelle intermédiaire 19.

Le carter de détecteur 11 comprend un doigt froid 22, une embase 23 de raccordement électrique, un support de couvercle 24 et un couvercle 25.

Le détecteur infrarouge 16 est un détecteur CFPA (Cooled Focal Plane Array) constitué d'une matrice de pixels sensibles au rayonnement infrarouge. Le détecteur infrarouge 16 présente une face de détection de forme générale plane, propre à recevoir le rayonnement infrarouge en provenance de la cible, et ayant un axe optique X perpendiculaire à la face de détection et centré par rapport à celle-ci.

Le détecteur infrarouge 16 est raccordé électriquement à des plots de contact 26 de la coupelle intermédiaire 19 au moyen d'un câblage par fils.

L'embase 23 est formée en un matériau diélectrique, tel que du verre, dans lequel sont noyées des broches électriques 27 permettant une collecte des signaux électrique en provenance du détecteur infrarouge 16 vers le module de traitement 5.

Le couvercle 25 est monté sur le support de couvercle 24. Le couvercle 25 comprend un corps 28, une fenêtre de visée 29, un queusot 31 et un capuchon de protection 32.

Le corps 28 présente une ouverture de visée 33 et une ouverture d'aspiration 34. La fenêtre 29 ferme l'ouverture de visée 33 et est formée en un matériau transparent au rayonnement infrarouge, par exemple en germanium. Le queusot 31 présente une première extrémité raccordée à l'ouverture d'aspiration 34 et une deuxième extrémité propre à être raccordée à un dispositif d'aspiration pour créer un vide partiel (10⁻⁶ bars) à l'intérieur de la première cavité 21. Le capuchon de protection 32 obture la deuxième extrémité afin de maintenir le vide créé dans la première cavité 21.

Le doigt froid 22 présente une partie cylindrique allongée 35 s'étendant à l'intérieur de l'embase 23 et une partie de raccordement 36.

La partie cylindrique 35 est destinée à contenir l'échangeur thermique de la machine à froid. A cet effet, la partie cylindrique 35 comprend une paroi latérale cylindrique mince entourant l'échangeur thermique de la machine à froid. La paroi est fermée à une extrémité par le bouchon 18 qui est en contact avec le substrat 17 supportant le détecteur infrarouge 16, de manière à assurer un refroidissement du détecteur 16.

La partie de raccordement 36 est adaptée pour contenir le cylindre de la machine à froid. La partie de raccordement 36 comprend une paroi latérale cylindrique épaisse, entourant le cylindre de la machine à froid, et une couronne 37 s'étendant autour de la paroi cylindrique, dans un plan radial par rapport à la paroi cylindrique. La couronne 37 présente une surface d'appui 38 propre à venir en appui sur le carter de machine à froid 12.

Le doigt froid 22, l'embase 23 de raccordement électrique, le support de couvercle 24 et le couvercle 25 sont soudés les uns aux autres, par exemple par soudure laser, de manière à rendre la première cavité 21 étanche.

La partie de production de froid 8 comprend une machine à froid 39 (partiellement représentée) et un carter de machine à froid 12 propre à loger la machine à froid 39. Le carter de machine à froid 12 définit une deuxième cavité 41 contenant la machine à froid 39, la deuxième cavité 41 étant remplie d'un gaz de refroidissement, tel que de l'hélium (He). La machine à froid 39 fonctionne selon un processus cyclique de Stirling permettant de refroidir le gaz de refroidissement. A cet effet, la machine à froid 39 comprend un cylindre 42, un piston 43 propre à coulisser dans le cylindre et un échangeur thermique 44. L'échangeur thermique 44 comprend un empilement d'ailettes de refroidissement 45 et un tube régénérateur 46 contenant l'empilement.

Le carter de machine à froid 12 présente une ouverture 47 propre à recevoir la partie de raccordement 36 du doigt froid 22, et un collet 48 entourant l'ouverture 47. Le collet 48 présente une surface cylindrique externe filetée 49.

Par ailleurs, le collet 48 présente un épaulement 51 dans lequel est disposé un joint d'étanchéité 52. Le joint d'étanchéité 52 est un joint présentant une section transversale en forme de C.

La carter de machine à froid 12 présente par ailleurs des ailettes de refroidissement 53 permettant un refroidissement du gaz de refroidissement par échange thermique avec l'air ambiant.

La partie de motorisation 9 comprend un moteur électrique (non-représenté) et un carter de moteur 54 propre à loger le moteur électrique. Le moteur électrique est propre à entrainer le piston 43 de la machine à froid. Le carter de moteur 54 présente des broches d'alimentation 55 pour relier le moteur électrique à une source d'alimentation.

Le module de détection 4 comprend également un dispositif de fixation 56 pour fixer le carter de détecteur 11 sur le carter de machine à froid 12. Le dispositif de fixation 56 comprend un écrou 57 entourant le carter de détecteur 11 et propre à être vissé sur le carter de machine à froid 12.

L'écrou 57 est formé en une seule pièce de matière.

Comme cela est représenté sur la figure 4, l'écrou 57 comprend une rondelle 58 propre à venir en appui contre la couronne 37 du carter de détecteur 11, et un anneau 59 présentant une surface interne filetée 61 propre à coopérer avec la surface externe filetée 49 du carter de machine à froid 12.

Le dispositif de fixation 56 comprend un pion d'indexage 62 fixé au carter de machine à froid 12 et un orifice d'indexage 63 ménagé dans le carter de détecteur 11. L'orifice d'indexage 63 est prévu pour recevoir le pion d'indexage 62 de manière à maintenir le carter de détecteur 11 en position par rapport au carter de machine à froid 12 pendant le vissage de l'écrou 57. L'unité de détection 4 étant fixée dans le boîtier 2 des jumelles 1 par le carter de machine à froid 12, le pion d'indexage 62 et l'orifice d'indexage 63 permettent d'obtenir une orientation angulaire correcte du détecteur 16 dans les jumelles 1.

Lors de la fabrication de la partie de détection 7, l'écrou 57 est d'abord enfilé sur le doigt froid 22, avant que le doigt froid 22 soit soudé à l'embase 23. De cette manière, une fois la soudure réalisée, l'écrou 57 est inséparable du carter de détecteur 11.

L'assemblage de la partie de détection 7 et de la partie de production de froid 8 est réalisé de la manière suivante.

La partie de raccordement 36 du doigt froid 22 est insérée dans le carter de machine à froid 12 via l'ouverture 47, jusqu'à ce que le carter de détecteur 11 vienne en appui contre le carter de machine à froid 12, plus précisément, jusqu'à ce que la couronne 37 vienne en appui contre le collet 48. Simultanément, l'échangeur thermique 44 de la machine à froid 39 est inséré dans la partie cylindrique 36 du doigt froid 22.

Le carter de détection 11 est positionné par rapport au carter de machine à froid 12 de sorte que le pion d'indexage 62 pénètre dans l'orifice d'indexage 63, assurant un positionnement relatif correct entre les deux carters 11 et 12.

Une fois le carter de détection 11 correctement positionné par rapport au carter de machine à froid 12, l'écrou 57 est vissé sur le carter de machine à froid 12. L'écrou 57 est vissé autour d'un axe de vissage confondu avec l'axe optique X.

Le vissage de l'écrou 57 a pour effet d'une part, de solidariser les carters 11 et 12 entre eux, et d'autre part, de mettre en compression le joint d'étanchéité 52 entre les deux carters 11 et 12. En effet, la rondelle 58 de l'écrou 57 vient presser le joint d'étanchéité 52 contre l'épaulement 51, par l'intermédiaire de la couronne 37. De cette manière, une compression homogène du joint d'étanchéité 52 peut être obtenue.

De cette manière, la fixation des carters 11 et 12 entre eux ne nécessite qu'une seule opération de vissage.

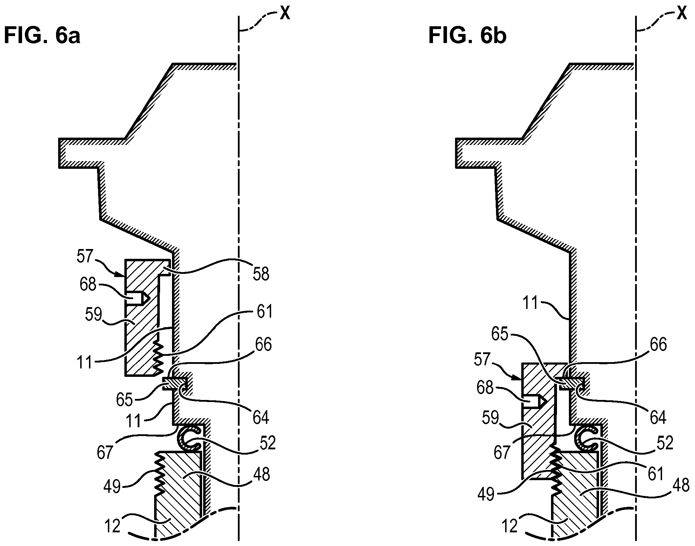

Pour faciliter les opérations d'assemblage, il est possible de maintenir le carter de détection 11 contre le carter de machine à froid 12, par exemple à l'aide d'une presse, de manière à assurer un positionnement relatif correct entre les deux carters pendant le vissage de l'écrou 57.Les figures 6a et 6b représentent de manière schématique une fixation des carters 11 et 12 selon un deuxième mode de réalisation.

Ce deuxième mode de réalisation est identique au premier mode de réalisation, excepté que le carter de détecteur 11 ne comprend pas de couronne 37. A la place, le carter de détecteur 11 comprend une gorge 64 formée dans la paroi latérale cylindrique du carter de détecteur 11, et un anneau élastique 65 (ou circlip) reçu dans la gorge 64. L'anneau élastique 65 peut être inséré dans la gorge 64 à l'aide d'une pince à circlip.

L'anneau élastique 65 présente une surface d'appui 66, sur laquelle la rondelle 58 de l'écrou 57 vient en appui pour presser le carter de détecteur 11 contre le carter de machine à froid 12.

Le carter de détecteur 11 comprend en outre un épaulement 67 dans lequel est disposé le joint d'étanchéité 52.

L'écrou 57 comprend par ailleurs un orifice 68 pour l'insertion d'un ergot d'une clef à ergot pouvant être utilisée pour le vissage de l'écrou 57.

L'assemblage de la partie de détection 7 et de la partie de production de froid 8 est réalisé de la manière suivante.

La partie de raccordement 36 du doigt froid 22 est insérée dans le carter de machine à froid 12 via l'ouverture 47, de sorte que le joint d'étanchéité 52 se trouve pris entre le carter de détecteur 11 et le carter de machine à froid 12 (figure 6a). Plus précisément, le joint d'étanchéité 52 se trouve pris entre l'épaulement 67 du carter de détecteur 11 et le collet 48 du carter de machine à froid 12.

Une fois le carter de détecteur 11 correctement positionné par rapport au carter de machine à froid 12, l'écrou 57 est vissé sur le carter de machine à froid 12 (figure 6b), par exemple à l'aide d'une clef à ergot. L'écrou 57 est vissé autour d'un axe de vissage confondu avec l'axe optique X.

Le vissage de l'écrou 57 a pour effet d'une part, de solidariser les carters 11 et 12 entre eux, et d'autre part, de mettre en compression le joint d'étanchéité 52 entre les deux carters 11 et 12. En effet, la rondelle 58 de l'écrou 57 vient presser le joint d'étanchéité 52 contre le collet 48, par l'intermédiaire de l'anneau élastique 65.

De même que dans le premier mode de réalisation, la fixation des carters 11 et 12 entre eux ne nécessite qu'une seule opération de vissage.

Par ailleurs, un avantage de ce deuxième mode de réalisation est que l'écrou 57 peut être démonté, c'est-à-dire qu'il peut être séparé des carters 11 et 12. Il suffit à cet effet de retirer l'anneau élastique 65. Cela facilite les manipulations du module de détection (4) lors de sa fabrication

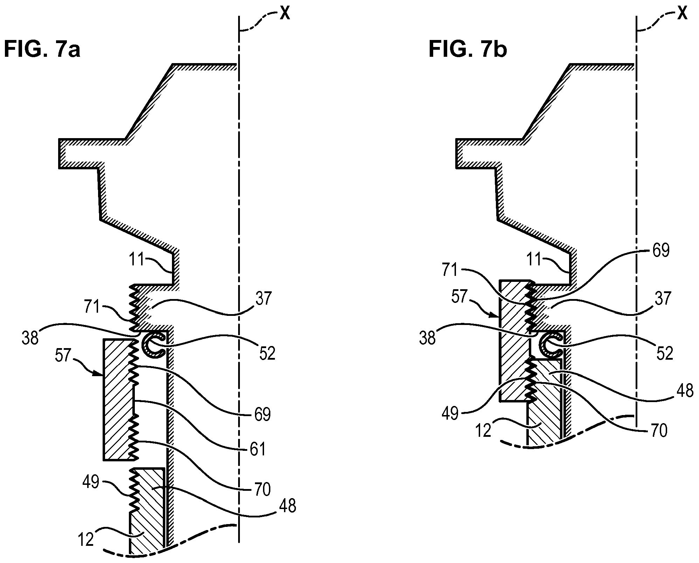

Les figures 7a et 7b représente de manière schématique une fixation des carters 11 et 12 selon un troisième mode de réalisation.

Ce troisième mode de réalisation est identique au premier mode de réalisation, excepté que l'écrou 57 ne comprend pas de rondelle 58.

En revanche, l'écrou 57 comprend une surface interne 61 présentant une première portion filetée 69 et une deuxième portion filetée 70. La première portion filetée 69 présente un premier pas et la deuxième portion filetée 70 présente un deuxième pas, inversé par rapport au premier pas.

Le carter de détecteur 11 présente une surface externe filetée 71 propre à coopérer avec la première portion filetée 69 de l'écrou 57. Plus précisément, la surface externe filetée 71 est une surface externe de la couronne 37.

Le carter de machine à froid 12 présente une surface externe filetée 49 propre à coopérer avec la deuxième portion filetée 70 de l'écrou 57.

Comme les portions filetées présentent des pas inversés, l'écrou 57 peut être simultanément vissé sur le carter de détecteur 11 et le carter de machine à froid 12 en une seule opération de vissage.

Le vissage de l'écrou sur les carter 11 et 12 a pour effet de mettre en compression le joint d'étanchéité 52 entre les carters 11 et 12.

Dans le troisième mode de réalisation, l'écrou 57 est démontable par simple dévissage de l'écrou, ce qui facilite les manipulations du module de détection lors de sa fabrication.

## Revendications

1. Module de détection infrarouge (4) comprenant :
- une partie de détection (7) comprenant un détecteur infrarouge (16) et un carter de détecteur (11) propre à loger le détecteur infrarouge (16),
- une partie de production de froid (8) comprenant une machine à froid (39) pour le refroidissement du détecteur (16) et un carter de machine à froid (12) propre à loger la machine à froid (39),
- un dispositif de fixation (56) pour fixer le carter de détecteur (11) sur le carter de machine à froid (12), le dispositif de fixation (56) comprenant un écrou (57) propre à être vissé sur le carter de détecteur (11) et/ou sur le carter de machine à froid (12) de manière à solidariser les carters entre eux, et
- un pion d'indexage (62) fixé à l'un des carters (11, 12) et un orifice d'indexage (63) ménagé dans l'autre carter (11, 12), l'orifice d'indexage (63) étant prévu pour recevoir le pion d'indexage (62) de manière à maintenir les carters (11, 12) en position l'un par rapport à l'autre pendant le vissage de l'écrou (57).

2. Module selon la revendication 1, dans lequel le carter de détecteur (11) comprend un doigt froid (22) présentant une partie cylindrique allongée (35) destinée à contenir un échangeur thermique (44) de la machine à froid.

3. Module selon l'une des revendications 1 et 2, comprenant un joint d'étanchéité (52) disposé entre le carter de détecteur (11) et le carter de machine à froid (12), et dans lequel le vissage de l'écrou (57) a pour effet de mettre en compression le joint d'étanchéité (52) entre le carter de détecteur (11) et le carter de machine à froid (12).

4. Module selon la revendication 3, dans lequel le joint d'étanchéité (52) est un joint ayant une section transversale en forme de C.

5. Module selon l'une des revendications 1 à 4, dans lequel l'écrou (57) comprend une rondelle (58) propre à venir en appui contre une surface d'appui du carter de détecteur (11), et une surface interne filetée (61) propre à coopérer avec une surface externe filetée (49) du carter de machine à froid (12), le vissage de l'écrou (57) sur le carter de machine à froid (12) ayant pour effet de serrer le carter de détecteur (11) contre le carter de machine à froid (12) par le biais de la rondelle (58).

6. Module selon la revendication 5, dans lequel le carter de détecteur (11) comprend une couronne (37), la surface d'appui étant une surface de la couronne (37).

7. Module selon la revendication 5, dans lequel le carter de détecteur (11) comprend une gorge (64) et un anneau élastique (65) reçu dans la gorge (64), la surface d'appui étant une surface (66) de l'anneau élastique (65).

8. Module selon l'une des revendication 1 à 4, dans lequel l'écrou (57) comprend une surface interne (61) présentant une première portion filetée (69) propre à coopérer avec une surface externe filetée (71) du carter de détecteur (11) et une deuxième portion filetée (70) propre à coopérer avec une surface externe filetée (49) du carter de machine à froid (12).

9. Module selon la revendication 8, dans lequel la première portion filetée (69) présente un premier pas et la deuxième portion filetée (70) présente un deuxième pas, inversé par rapport au premier pas.

10. Module selon l'une des revendications 1 à 9, dans lequel l'écrou (57) entoure le carter de détecteur (11) et/ou le carter de machine à froid (12).

11. Module selon l'une des revendications 1 à 10, dans lequel le carter de détecteur (11) comprend :
- une première partie (23) définissant une cavité (21) logeant le détecteur infrarouge (16), et
- une deuxième partie (22) propre à être insérée dans le carter de machine à froid (12),
dans lequel l'écrou (57) a été monté sur la deuxième partie (22) avant soudure de la première partie (23) sur la deuxième partie (22), de sorte qu'une fois les deux parties (22, 23) soudées, l'écrou (57) est inséparable du carter de détecteur (11).

12. Module selon l'une des revendications 1 à 11, dans lequel le détecteur (4) présente un axe optique (X), et l'écrou (57) est propre à être vissé sur le carter de détecteur (11) et/ou sur le carter de machine à froid (12) autour d'un axe de vissage confondu avec l'axe optique (X).

13. Equipement de vision infrarouge (1), comprenant un module de détection (4) conforme à l'une des revendications 1 à 12.

14. Equipement selon la revendication 13, l'équipement (1) étant des jumelles de vision infrarouge.

## Patentansprüche

1. Infrarotdetektionsmodul (4), umfassend:
- einen Detektionsteil (7), umfassend einen Infrarotdetektor (16) und ein Detektorgehäuse (11), das imstande ist, den Infrarotdetektor (16) unterzubringen,
- einen Kälteproduktionsteil (8), umfassend eine Kältemaschine (39) zum Kühlen des Detektors (16) und ein Kältemaschinengehäuse (12), das imstande ist, die Kältemaschine (39) unterzubringen,
- eine Befestigungsvorrichtung (56) zur Befestigung des Detektorgehäuses (11) auf dem Kältemaschinengehäuse (12), wobei die Befestigungsvorrichtung (56) eine Mutter (57) umfasst, die imstande ist, auf das Detektorgehäuse (11) und/oder auf das Kältemaschinengehäuse (12) derart geschraubt zu sein, dass die Gehäuse miteinander verbunden sind, und
- einen Indexierstift (62), der auf einem der Gehäuse (11, 12) befestigt ist, und eine Indexieröffnung (63), die in dem anderen Gehäuse (11, 12) eingerichtet ist, wobei die Indexieröffnung (63) vorgesehen ist, den Indexierstift (62) derart aufzunehmen, dass die Gehäuse (11, 12) während des Schraubens der Mutter (57) zueinander in Position gehalten werden.

2. Modul nach Anspruch 1, wobei das Detektorgehäuse (11) einen kalten Finger (22) umfasst, der einen länglichen zylindrischen Teil (35) aufweist, der bestimmt ist, einen Wärmetauscher (44) der Kältemaschine zu enthalten.

3. Modul nach einem der Ansprüche 1 und 2, umfassend eine Dichtung (52), die zwischen dem Detektorgehäuse (11) und dem Kältemaschinengehäuse (12) angeordnet ist, und wobei die Verschraubung der Mutter (57) bewirkt, dass die Dichtung (52) zwischen dem Detektorgehäuse (11) und dem Kältemaschinengehäuse (12) komprimiert wird.

4. Modul nach Anspruch 3, wobei die Dichtung (52) eine Dichtung mit einem C-förmigen Querschnitt ist.

5. Modul nach einem der Ansprüche 1 bis 4, wobei die Mutter (57) eine Scheibe (58) umfasst, die imstande ist, sich auf einer Stützfläche des Detektorgehäuses (11) abzustützen, und eine innere gewindete Fläche (61), die imstande ist, mit einer äußeren gewindeten Fläche (49) des Kältemaschinengehäuses (12) zusammenzuwirken, wobei die Verschraubung der Mutter (57) auf dem Kältemaschinengehäuse (12) bewirkt, dass das Detektorgehäuse (11) mittels der Scheibe (58) gegen das Kältemaschinengehäuse (12) gespannt wird.

6. Modul nach Anspruch 5, wobei das Detektorgehäuse (11) einen Kranz (37) umfasst, wobei die Stützfläche eine Fläche des Kranzes (37) ist.

7. Modul nach Anspruch 5, wobei das Detektorgehäuse (11) eine Nut (64) und einen elastischen Ring (65) umfasst, der in der Nut (64) aufgenommen ist, wobei die Stützfläche eine Fläche (66) des elastischen Rings (65) ist.

8. Modul nach einem der Ansprüche 1 bis 4, wobei die Mutter (57) eine innere Fläche (61) umfasst, die einen ersten gewindeten Abschnitt (69) aufweist, der imstande ist, mit einer äußeren gewindeten Fläche (71) des Detektorgehäuses (11) zusammenzuwirken, und einen zweiten gewindeten Abschnitt (70), der imstande ist, mit einer äußeren gewindeten Fläche (49) des Kältemaschinengehäuses (12) zusammenzuwirken.

9. Modul nach Anspruch 8, wobei der erste gewindete Abschnitt (69) eine erste Steigung aufweist und der zweite gewindete Abschnitt (70) eine zweite Steigung umgekehrt in Bezug auf die erste Steigung aufweist.

10. Modul nach einem der Ansprüche 1 bis 9, wobei die Mutter (57) das Detektorgehäuse (11) und/oder das Kältemaschinengehäuse (12) umgibt.

11. Modul nach einem der Ansprüche 1 bis 10, wobei das Detektorgehäuse (11) umfasst:
- einen ersten Teil (23), der einen Hohlraum (21) definiert, der den Infrarotdetektor (16) unterbringt, und
- einen zweiten Teil (22), der imstande ist, in das Kältemaschinengehäuse (12) eingesetzt zu sein,
wobei die Mutter (57) auf dem zweiten Teil (22) vor dem Verschweißen des ersten Teils (23) auf dem zweiten Teil (22) angebracht wurde, so dass, sobald die zwei Teile (22, 23) verschweißt sind, die Mutter (57) vom Detektorgehäuse (11) untrennbar ist.

12. Modul nach einem der Ansprüche 1 bis 11, wobei der Detektor (4) eine optische Achse (X) aufweist und die Mutter (57) imstande ist, auf dem Detektorgehäuse (11) und/oder auf dem Kältemaschinengehäuse (12) um eine Schraubachse geschraubt zu sein, die mit der optischen Achse (X) zusammenfällt.

13. Infrarotsichtausrüstung (1), umfassend ein Detektionsmodul (4) nach einem der Ansprüche 1 bis 12.

14. Ausrüstung nach Anspruch 13, wobei die Ausrüstung (1) ein Infrarotsichtfernglas ist.

## Claims

1. Infrared detection module (4) comprising:
- a detection part (7) comprising an infrared detector (16) and a detector housing (11) for accommodating the infrared detector (16),
- a cold-production part (8) comprising a cooling machine (39) for cooling the detector (16) and a cooling machine housing (12) for accommodating the cooling machine (39),
- a fastening device (56) for fixing the detector housing (11) on the cooling machine housing (12), the fastening device (56) comprising a nut (57) for being screwed onto the detector housing (11) and/or onto the cooling machine housing (12) so as to secure the housings together, and
- an indexing pin (62) fixed to one of the housings (11, 12) and an indexing orifice (63) arranged in the other housing (11, 12), the indexing orifice (63) being provided to receive the indexing pin (62) so as to keep the housings (11, 12) in position relative to each other during screwing of the nut (57).

2. The module according to claim 1, wherein the detector housing (11) comprises a cold finger (22) having an elongated cylindrical part (35) intended to contain a heat exchanger (44) of the cooling machine.

3. The module according to one of claims 1 and 2, comprising a sealing joint (52) arranged between the detector housing (11) and the cooling machine housing (12), and wherein the effect of screwing the nut (57) is to compress the sealing joint (52) between the detector housing (11) and the cooling machine housing (12).

4. The module according to claim 3, wherein the sealing joint (52) is a joint having a transversal C-shaped cross-section.

5. The module according to one of claims 1 to 4, wherein the nut (57) comprises a washer (58) for bearing against a support surface of the detector housing (11), and a threaded inner surface (61) for cooperating with a threaded outer surface (49) of the cooling machine housing (12), the effect of screwing the nut (57) onto the cooling machine housing (12) being to clamp the detector housing (11) against the cooling machine housing (12) by means of the washer (58).

6. The module according to claim 5, wherein the detector housing (11) comprises a crown (37), the support surface being a surface of the crown (37).

7. The module according to claim 5, wherein the detector housing (11) comprises a groove (64) and an elastic ring (65) received in the groove (64), the support surface being a surface (66) of the elastic ring (65) .

8. The module according to one of claims 1 to 4, wherein the nut (57) comprises an inner surface (61) having a first threaded portion (69) for cooperating with a threaded outer surface (71) of the detector housing (11) and a second threaded portion (70) for cooperating with a threaded outer surface (49) of the cooling machine housing (12).

9. The module according to claim 8, wherein the first threaded portion (69) has a first pitch and the second threaded portion (70) has a second pitch, reversed relative to the first pitch.

10. The module according to one of claims 1 to 9, wherein the nut (57) encloses the detector housing (11) and/or the cooling machine housing (12).

11. The module according to one of claims 1 to 10, wherein the detector housing (11) comprises:
- a first part (23) defining a cavity (21) accommodating the infrared detector (16), and
- a second part (22) for being inserted in the cooling machine housing (12),
wherein the nut (57) has been mounted on the second part (22) prior to welding of the first part (23) onto the second part (22), such that once the two parts (22, 23) are welded, the nut (57) is inseparable from the detector housing (11).

12. The module according to one of claims 1 to 11, wherein the detector (4) has an optical axis (X), and the nut (57) is for being screwed onto the detector housing (11) and/or onto the cooling machine housing (12) around a screwing axis combined with the optical axis (X).

13. Infrared vision equipment (1), comprising a detection module (4) according to one of claims 1 a 12.

14. The equipment according to claim 13, the equipment (1) being infrared vision binoculars.
